# EUROPEAN PATENT APPLICATION

(11) **EP 4 375 720 A1**
(43) Date of publication of application: **29.05.2024**
(21) Application number: 23181402.1
(22) Date of filing: 26.06.2023
(51) Int. Cl.: G02B 6/44

(54) **OPTICAL FIBER RIBBON WITH A PASSIVE LAYER**

(30) Priority: 24.11.2022 IN 202211067689
(71) Applicant: Sterlite Technologies Limited, 122102 Haryana (IN)
(72) Inventor: Kumar, Sravan, 122102 Gurugram, Haryana (IN); Sahoo, Kishore, 122102 Gurugram, Haryana (IN); Gangwar, Raj, 122102 Gurugram, Haryana (IN)
(74) Representative: Petraz, Gilberto Luigi

(57) **Abstract**

The present disclosure relates to an optical fiber ribbon (100) having a plurality of optical fibers (102) arranged substantially parallel to one another and a plurality of resin joints (116) applied intermittently for contacting the color layer (114) of each pair of adjacent optical fibers to form bonded portions of the optical fiber ribbon (100). In particular, each optical fiber of the plurality of optical fibers (102) further comprises one or more coatings (108), a passive layer (112) surrounding the one or more coatings (108), a color layer (114) surrounding the passive layer (112).

## Description

### TECHNICAL FIELD

Embodiments of the present disclosure relate to the field of optical fiber, and more particularly to an optical fiber cable with accessible strength member.

This application claims the benefit of Indian Application No. 202211067689 titled "OPTICAL FIBER RIBBON WITH A PASSIVE LAYER" filed by the applicant on November 24, 2022 which is incorporated herein by reference in its entirety.

### BACKGROUND ART

Fiber to the premises/business/home (i.e., FTTx) provides broadband data transfer technology to the individual end-user. FTTx installations, which are being increasingly deployed throughout the world, are making use of innovative, reduced-cost system designs to promote the spread of the technology. For example, fiber is delivered in the last link by way of a micro-cable. Air-blown fibers provide another efficient model for delivering the link to the end-use terminus. There continues to be industry-wide focus on modes of deployment that overcome economic obstacles that impede fiber-based broadband solutions for data transmission to businesses and residences.

Optical fibers have seen increased use in a wide variety of electronics and telecommunications fields. Optical fiber ribbons hold multiple optical fibers together in a group or array. The optical fiber ribbon includes a body formed from a material that holds the optical fibers together and/or that provides structure that assists in the handling and connecting of the optical fibers of the ribbon to various components or devices.

Generally, an optical fiber has a glass core, a cladding, a primary coating, and then a secondary coating. Further, a color layer is generally disposed over the secondary coating and an Intermittently Bonded Ribbon [IBR] is made by bonding adjacent optical fibers intermittently using Ultraviolet (UV) curable resin applied on the color coating.

Prior art reference US2022155540A1 discloses about a sacrificial layer above a secondary coating of an optical fiber and above further the sacrificial layer disposed above the color layer. The ribbon bonds are present on the sacrificial layer. The reference

Another prior art reference IN202014049225Adiscloses a sacrificial layer above the secondary coating and that the ink can be added to the sacrificial layer.

The prior art references mentioned above have disadvantages such as when an optical fiber is stripped from an IBR, the secondary coating gets damaged, which is not desirable. Further, scrap generation is high due to splitting during bunching if bond strength is kept low and high bond strength can cause more damage to the secondary coating during stripping. As per industry generic requirements and characteristics of single-mode and multimode optical fibers, optical fiber ribbons, and optical fiber cables, there should not be any damage to fiber coatings (*i.e.,* the primary and secondary coatings) during stripping.

Therefore, in the light of the above-stated discussion, there is a need to provide a technical solution that overcomes the aforementioned problems by providing an optical fiber ribbon (*i.e.,* an IBR) such that each optical fiber has a passive layer and is manufactured in a way such that there is no damage to coatings (*e.g.,* primary and secondary coatings) of an optical fiber when the optical fiber is stripped from the optical fiber ribbon. Thus, the present disclosure provides an optical fiber ribbon with a passive layer.

### SUMMARY OF THE DISCLOSURE

Embodiments of the present disclosure provide an optical fiber ribbon with a passive layer.

According to the first aspect of the present disclosure, an optical fiber ribbon comprising a plurality of optical fibers arranged substantially parallel to one another and a plurality of resin joints configured to intermittently contact the color layer of each pair of adjacent optical fibers of the plurality of optical fibers to form bonded portions of the optical fiber ribbon. Each optical fiber of the plurality of optical fibers further comprises one or more coatings, a passive layer surrounding the one or more coatings, a color layer surrounding the passive layer.

According to the second aspect of the present disclosure, each optical fiber of the plurality of optical fibers further comprising a core , a cladding , the one or more coatings that surrounds the cladding. In particular, the cladding is configured to surround the core and the one or more coatings is configured to surround the cladding

According to the third aspect of the present disclosure, one or more coatings comprises at least one of, (i) a combination of an inner coating (108aa) and an outer coating and (ii) the outer coating.

According to the fourth aspect of the present disclosure, the passive layer is made up of an Ultraviolet (UV) curable acrylate polymer. In particular, the passive layer is cured at least 85%. Moreover, the thickness of the passive layer is in the range of 4 micrometers (µm) to 12 µm. Further, the passive layer has an elongation at break of at least 20 %. Furthermore, the passive layer has a tensile strength in a range of 2 Megapascal to 40 MPa. And, the passive layer has a viscosity in a range of 0.2 Pascal-Second (Pa.s) to 4.2 Pa.s at 30 degree Celsius (°C).

According to the fifth aspect of the present disclosure, the passive layer and the color layer are applied in a tandem process.

According to the sixth aspect of the present disclosure, the passive layer and the color layer has a first strip force therebetween in a range of 3 Newton (N) to 9N. And, the passive layer and the second coating has a second strip force therebetween in a range of 1 N to 5 N.

According to the seventh aspect of the present disclosure, the color layer concentrically surrounds an outer circumferential surface of the passive layer.

These and other aspects herein will be better appreciated and understood when considered in conjunction with the following description and the accompanying drawings. It should be understood, however, that the following descriptions are given by way of illustration and not of limitation. Many changes and modifications is made within the scope of the disclosure herein without departing from the spirit thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

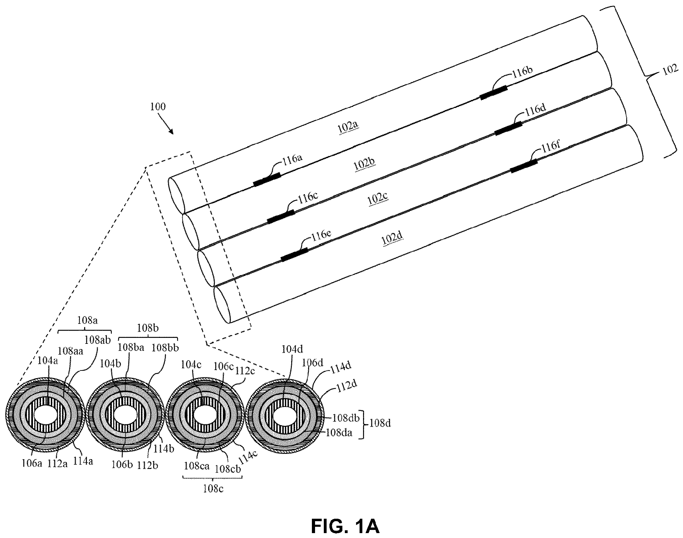

Fig. 1A is a pictorial snapshot illustrating a perspective view of an optical fiber ribbon in accordance with an embodiment of the present disclosure;

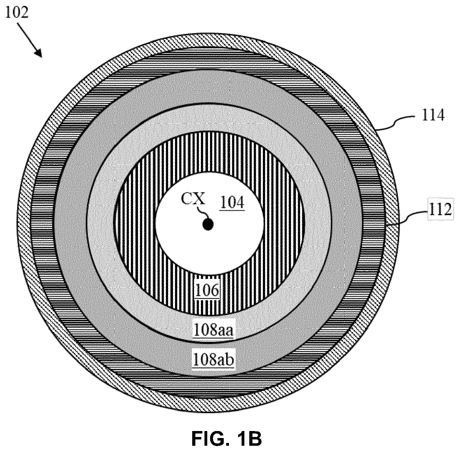

Fig. 1B is a pictorial snapshot illustrating a cross-sectional view of an optical fiber of the optical fiber ribbon in accordance with another embodiment of the present disclosure ;

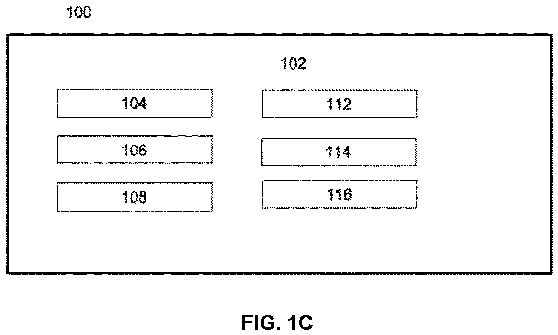

Fig. 1C is a block diagram illustrating components of the optical fiber of the optical fiber ribbon in accordance with an embodiment of the present disclosure .

The optical fiber ribbon illustrated in the accompanying drawings, which like reference letters indicate corresponding parts in the various figures. It should be noted that the accompanying figure is intended to present illustrations of exemplary embodiments of the present disclosure . This figure is not intended to limit the scope of the present disclosure . It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements is included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

Optical fiber refers to a medium associated with the transmission of information over long distances in the form of light pulses. The optical fiber uses light to transmit voice and data communications over long distances when encapsulated in a jacket/sheath. The optical fiber is of ITU.T G.657.A2 category. Alternatively, the optical fiber is of ITU.T G.657.A1 or G.657.B3 or G.652.D or other suitable categories. The ITU.T stands for International Telecommunication Union-Telecommunication Standardization Sector, is one of the three sectors of the ITU. The ITU is the United Nations specialized agency in the field of telecommunications and is responsible for studying technical, operating and tariff questions and issuing Recommendations on them with a view to standardizing telecommunications on a worldwide basis.

The term "core" of an optical fiber as used herein is referred to as the innermost cylindrical structure present in the center of the optical fiber, that is configured to guide the light rays inside the optical fiber.

The term "cladding" of an optical fiber as used herein is referred to as one or more layered structure covering the core of an optical fiber from the outside, that is configured to possess a lower refractive index than the refractive index of the core to facilitate total internal reflection of light rays inside the optical fiber. Further, the cladding of the optical fiber include an inner cladding layer coupled to the outer surface of the core of the optical fiber and an outer cladding layer coupled to the inner cladding from the outside.

The term "refractive index" as used herein is referred to as the measure of change of speed of light from one medium to another and is particularly measured in reference to speed of light in vacuum. More specifically, the refractive index facilitates measurement of bending of light from one medium to another medium.

The term one or more coatings 108a is interchangeably referred to and designated as "the first one or more coatings 108a " for convenience throughout the specification.

The term second set of one or more coatings 108b is interchangeably referred to and designated as the second one or more coatings 108b" for convenience throughout the specification.

The term third set of one or more coatings 108c is interchangeably referred to and designated as "the third one or more coatings 108c" for convenience throughout the specification.

The term the first optical fiber 102a is interchangeably referred to and designated as "the optical fiber 102" for convenience throughout the specification.

The term first core 104a is interchangeably referred to and designated as "the core 104" for convenience throughout the specification.

The term first cladding 106a is interchangeably referred to and designated as "the cladding 106 for convenience throughout the specification,

The term first one or more coatings 108a is interchangeably referred to and designated as "the one or more coatings 108" for convenience throughout the specification

The term first inner coating 108aa is interchangeably referred to and designated as "the inner coating 108aa" for convenience throughout the specification

The term first outer coating 108ab is interchangeably referred to and designated as "the outer coating 108ab"for convenience throughout the specification

The term first passive layer 112a is interchangeably referred to and designated as "the passive layer 112" for convenience throughout the specification

The term first color layer 114a is interchangeably referred to and designated as "the color layer 114" for convenience throughout the specification

The term "curing" as used herein, refers to a chemical process that produces a toughening and/or hardening of a polymer material by cross-linking of polymer chains.

Fig. 1A and Fig. 1B are pictorial snapshots illustrating a perspective view of an optical fiber ribbon 100 in accordance with one or more exemplary aspects of the present disclosure. Fig. 1C is a block diagram illustrating components of the optical fiber of the optical fiber ribbon in accordance with an embodiment of the present disclosure .

Now simultaneously referring to Fig.1A- Fig.1C. The optical fiber ribbon 100 is an easy to implement optical fiber ribbon that is manufactured in a way such that there is no damage to optical fiber's coatings (*e.g.,* primary and secondary coatings). Moreover, the optical fiber ribbon 100 have a plurality of optical fibers 102 arranged substantially in parallel and adjacent to one another to form the optical fiber ribbon 100. Further, the plurality of optical fibers 102 are intermittently bonded to form an intermittently bonded optical fiber.

Each optical fiber of the plurality of optical fibers 102 has a substantially circular cross section. The plurality of optical fibers 102 has first through fourth optical fibers 102a-102d. In particular, the first through fourth optical fibers 102a-102d have first through fourth cores 104a-104d, first through fourth claddings 106a-106d, first through fourth set of one or more coatings 108, first through fourth passive layers 112a-112d, and first through fourth color layers 114a-114d, respectively. Moreover, the first optical fiber 102a have the first core 104a, the first cladding 106a, the first set of one or more coatings 108a of which a first inner coating 108aa and a first outer coating 108ab are shown, the first passive layer 112a, and the first color layer 114a.

In accordance with an embodiment of the present disclosure , the second optical fiber 102b have the second core 104b, the second cladding 106b, the second one or more coatings 108b" of which a second inner coating 108ba and a second outer coating 108bb is shown, the second passive layer 112b, and the second color layer 114b.

Similarly, the third optical fiber 102c have the third core 104c, the third cladding 106c, the third one or more coatings 108c of which a third inner coating 108ca and a third outer coating 108cb is shown, the third passive layer 112c, and the third color layer 114c.

The fourth optical fiber 102d have the fourth core 104d, the fourth cladding 106d, the fourth set of one or more coatings 108d (hereinafter interchangeably referred to and designated as "the fourth one or more coatings 108d") of which a fourth inner coating 108da and a fourth outer coating 108db is shown, the fourth passive layer 112d, and the fourth color layer 114d.

In accordance with an embodiment of the present disclosure , the optical fiber ribbon 100 has four optical fibers but it will be apparent to a person skilled in the art that the scope of the present disclosure is not limited to it. In alternative aspects, the optical fiber ribbon 100 have any number of optical fibers, without deviating from the scope of the present disclosure.

In accordance with an embodiment of the present disclosure , first one or more coatings 108a has one of, the first outer coating 108ab and a combination of the first inner coating 108aa and the first outer coating 108ab. Alternatively, in one aspect, the first one or more coatings 108a have only the first outer coating 108ab. In another aspect of the present disclosure, the first one or more coatings 108a have a combination of the first inner coating 108aa and the first outer coating 108ab.

In accordance with an embodiment of the present disclosure , the second through fourth one or more coatings 108b-108d have only the second through fourth outer coatings 108bb-108db. Alternatively, in another aspect, the second through fourth one or more coatings 108b-108d have a combination of the second through fourth inner coatings 108ba-108da and the second through fourth outer coatings 108bb-108db, respectively, without deviating from the scope of the present disclosure.

In accordance with an embodiment of the present disclosure , the optical fiber ribbon 100 further have a plurality of resin joints 116. The first through sixth resin joints 116a-116f is applied intermittently contacting the color layers (*i.e.,* the first through fourth color layers 114a-114d) of the adjacent optical fibers of the plurality of optical fibers 102 to form bonded portions of the optical fiber ribbon 100.

In some aspects of the present disclosure, the first through fourth optical fibers 102a-102d is bonded in a bonding pattern such as, but not limited to, a parallel pattern, a criss-cross pattern, and the like. Aspects of the present disclosure are intended to include and/or otherwise cover any type of the bonding pattern without deviating from the scope of the present disclosure.

In particular, the first and second resin joints 116a and 116b is applied intermittently contacting the first and second color layers 114a and 114b of the first and second optical fibers 102a and 102b, respectively. Further, the third and fourth resin joints 116c and 116d are applied intermittently contacting the second and third color layers 114b and 114c of the second and third optical fibers 102b and 102c, respectively. Furthermore, the fifth and sixth resin joints 116e and 116f are applied intermittently contacting the third and fourth color layers 114c and 114d of the third and fourth optical fibers 102c and 102d, respectively.

The optical fiber ribbon 100 has six resin joints but it will be apparent to a person skilled in the art that the scope of the present disclosure is not limited to it. In various other aspects, the optical fiber ribbon 100 have any number of resin joints, without deviating from the scope of the present disclosure

In accordance with an embodiment of the present disclosure , the plurality of resin joints are made up of a curable resin material such as but not limited to an Ultraviolet (UV) curable resin material, a polyester resin, a phenolic resin, an alkyd resin, a polycarbonate resin, a polyamide resin, a silicone resin, an epoxy resin, an acrylate polymer, and the like. Aspects of the present disclosure are intended to include and/or otherwise cover any type of the curable resin, including known, related, and later developed curable resins, without deviating from the scope of the present disclosure.

In accordance with an embodiment of the present disclosure , the optical fiber 102 is, but not limited to, a single mode optical fiber, a multimode optical fiber, a single core optical fiber, a multicore optical fiber, and the like. Moreover, the optical fiber 102 have a diameter in a range of 130 micrometers (µm) to 260 µm. Further, the optical fiber 102 have the core 104, the cladding 106, the one or more coatings 108, the passive layer 112, and color layer 114.

In accordance with an embodiment of the present disclosure , the core 104 is arranged concentric to a central axis CX of the optical fiber 102 such that the core 104 runs longitudinally, (*i.e.,* concentric to the central axis CX). In particular, the core 104 is designed to guide one or more of optical signals. Moreover, the core 104 is a cylindrical structure that run along a length of the optical fiber 102. Further, the core 104 is made up of a material such as, but not limited to, a plastic, a pure silica glass, a doped silica glass, and the like. Aspects of the present disclosure are intended to include and/or otherwise cover any type of the material for the core 104 including known, related and later developed materials, without deviating from the scope of the present disclosure.

In accordance with an embodiment of the present disclosure , the core 104 defines a spatial path to facilitate in carrying the one or more optical signals. In some aspects of the present disclosure, the core 104 can have a circular cross-sectional shape. It will be apparent to a person skilled in the art that the core 104 is shown to have the circular shape to make the illustrations concise and clear and should not be considered as a limitation of the present disclosure.

In accordance with an embodiment of the present disclosure , the optical fiber 102 has the cladding 106 concentrically surrounding an outer circumferential surface of the core 104. In some aspects of the present disclosure, the cladding 106 is made up of a material such as, but not limited to, a plastic, a pure silica glass, a doped silica glass, and the like. Aspects of the present disclosure are intended to include and/or otherwise cover any type of the material for the cladding 106 including known, related and later developed materials, without deviating from the scope of the present disclosure. In some aspects of the present disclosure, the refractive index of the cladding 106 is manipulated to ensure restriction of the light signal well within the core 104 of the optical fiber 102.

In accordance with an embodiment of the present disclosure , the optical fiber 102 further has the inner coating 108aa and the outer coating 108ab. In various other aspects, the optical fiber 102 have any number of inner and outer coatings, without deviating from the scope of the present disclosure. In particular, the inner and outer coatings 108aa and 108ab can be made up of an ultraviolet (UV) light curable resin which is formed of, for example, a single material. In another aspect, the inner and outer coatings 108aa and 108ab can have the UV light curable acrylate mixture of monomers, oligomers, photo initiators, and additives, such that the mixtures are cured separately.

In accordance with an embodiment of the present disclosure , the optical fiber 102 has the passive layer 112 concentrically surrounding and in contact with the outer coating 108ab. Particularly, the passive layer 112 is disposed on the outer coating 108ab such that the passive layer 112 surrounds concentrically, an outer circumferential surface of the outer coating 108ab and the passive layer 112 is in contact with the outer coating 108ab. Further, the passive layer 112 is provided to protect the outer coating 108ab when the optical fiber 102 is stripped from the optical fiber ribbon 100. The passive layer 112 is made up of an Ultraviolet (UV) curable acrylate polymer. The passive layer 112 substantially limit damage to the outer coating 108ab and the inner coating 108aa when the optical fiber 102 is stripped from the optical fiber ribbon 100.

In accordance with an embodiment of the present disclosure , the passive layer 112 is cured at least 85 %. The curing of the passive layer 112 is done at least 85 % as below 85 %, bonding between the passive layer 112 and the color layer 114 is too strong and lead to damage to the outer coating 108ab of the optical fiber 102.

In accordance with an embodiment of the present disclosure ,, the passive layer 112 have a thickness that is in a range of 4 µm to 12 µm. Particularly, the thickness of the passive layer 112 is selected to be in the range of 4 µm to 12 µm, as below 4 µm, the coating process of the passive layer 112 is difficult and further at such thickness (*i.e.,* below 4 µm) the passive layer 112 not function properly. Further, in case the thickness of the passive layer 112 is selected above 12 µm, the thickness of the optical fiber 102 will increase which is not desirable. In some aspects of the present disclosure, the passive layer 112 have an elongation at break of at least 20 %.

In accordance with an embodiment of the present disclosure , the elongation at break of the passive layer 112 is selected to be 20 % as below 20 %, the passive layer not break easily and can thus damage the outer coating 108ab of the optical fiber 102.

In accordance with an embodiment of the present disclosure , the passive layer 112 have a tensile strength in a range of 2 Megapascal (MPa) to 40 MPa. Specifically, the tensile strength of the passive layer 112 is selected to be in the range of 2 MPa to 40 MPa, as below 2 MPa, mechanical strength not be enough for handling the optical fiber ribbon 100 and above 40 MPa, the passive layer 112 damage the outer coating 108ab of the optical fiber 102.

In some aspects of the present disclosure, at 30°C, the passive layer 112 have a viscosity in a range of 0.2 Pascal-Second (Pa.s) to 4.2 Pa.s. Particularly, if the viscosity is too less than 0.2 Pa.s then uniform application of the passive layer 112 is difficult, on the other hand viscosity above 4.2 Pa.s will make the passive layer 112 too viscous and difficult to handle.

In accordance with an embodiment of the present disclosure , the optical fiber 102 further has the color layer 114 concentrically surrounding and in contact with the passive layer 112. The passive layer 112 and the color layer 114 have a first strip force there between in a range of 3 Newtons (N) to 9 N. Below 3 N, the passive layer 112 not get removed and above 9 N, the passive layer 112 damage the outer coating 108ab of the optical fiber 102.

In accordance with an embodiment of the present disclosure , the passive layer 112 and the outer coating 108ab of the optical fiber 102 have a second trip force therebetween in a range of 1 N to 5 N. In other words, the second strip force between the passive layer 112 and the color layer 114 is selected to be in the range of 1 N to 5 N, as below 1 N, the second strip force not be enough for handling the optical fiber ribbon 100 and above 5 N, the second strip force damage the outer coating 108ab of the optical fiber 102 when the passive layer 112 is stripped off from the outer coating 108ab.

In some aspects of the present disclosure, the first strip force is relatively higher than the second strip force.

In some aspects of the present disclosure, the optical fiber 102 is manufactured by one of, a tandem manufacturing process, a separate manufacturing process. In an exemplary scenario, the passive layer 112 and the color layer 114 is applied by way of the tandem process layer 114 in a single process and/or the passive layer 112, the color layer 114, and optical fiber ribbon 100 is manufactured in a single process.

Thus, the optical fiber ribbon 100 of the present disclosure provides the passive layer 112 added in between the outer coating 108ab and the color layer 114. The plurality of resin joints 116 is applied over the color layer 114. When the optical fiber 102 is stripped from the optical fiber ribbon 100, the damage is restricted to the passive layer 112 and layer beneath (*i.e.,* the inner coating 108aa and the outer coating 108ab) remain intact. Further, the optical fiber ribbon 100 provides the plurality of resin joints 116 having bonds with high strength that prevent the outer coating 108ab from damage. The optical fiber ribbon 100 is a cost-effective optical fiber ribbon as the manufacturing of the optical fiber ribbon 100 would be approximately similar to standard optical fiber ribbon 100 due to reduced color layer 114 thickness.

Advantageously, the present disclosure provides an optical fiber ribbon 100 of the present disclosure is easy to implement as the passive layer 112 can be applied using the same process that is used to apply the color layer 114 and does not require any sophisticated equipment. Further, while stripping a fiber (*e.g.,* the optical fiber 102) from the optical fiber ribbon 100, damage to the inner coating 108aa and the outer coating 108ab of the optical fiber 102 is prevented. This further reduces scrap generation and makes handling easy.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance suggest or render expedient, but such are intended to cover the application or implementation without departing from the spirit or scope of the claims of the present technology.

In a case that no conflict occurs, the embodiments in the present disclosure and the features in the embodiments is mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber ribbon (100) **characterized in that**:
a plurality of optical fibers (102) arranged substantially parallel to one another;
wherein each optical fiber of the plurality of optical fibers (102) comprising:
one or more coatings (108);
a passive layer (112) surrounding the one or more coatings (108);wherein the passive layer (112) is in continuous contact with the one or more coatings (108); and
a color layer (114) surrounding the passive layer (112); wherein the color layer (114) is in continuous contact with the passive layer (112); and
a plurality of resin joints (116) applied for intermittently contacting the color layer (114) of each pair of adjacent optical fibers of the plurality of optical fibers (102) to form bonded portions of the optical fiber ribbon (100).

2. The optical fiber ribbon (100) as claimed in claim 1, wherein each optical fiber of the plurality of optical fibers (102) further comprising a core (104), a cladding (106), the one or more coatings (108) that surrounds the cladding (106).

3. The optical fiber ribbon (100) as claimed in claim 1, wherein the one or more coatings (108) comprises one of, (i) a combination of an inner coating (108aa) and an outer coating (108ab) and (ii) the outer coating (108ab).

4. The optical fiber ribbon (100) as claimed in claim 1, wherein the passive layer (112) is made up of an Ultraviolet (UV) curable acrylate polymer.

5. The optical fiber ribbon (100) as claimed in claim 1, wherein the passive layer (112) is cured at least 85%.

6. The optical fiber ribbon (100) as claimed in claim 1, wherein a thickness of the passive layer (112) is in a range of 4 micrometers (µm) to 12 µm.

7. The optical fiber ribbon (100) as claimed in claim 1, wherein the passive layer (112) and the color layer (114) is applied in a tandem process.

8. The optical fiber ribbon (100) as claimed in claim 1, wherein the passive layer (112) has an elongation at break of at least 20 %.

9. The optical fiber ribbon (100) as claimed in claim 1, wherein the passive layer (112) and the color layer (114) has a first strip force therebetween in a range of 3 Newton (N) to 9N.

10. The optical fiber ribbon (100) as claimed in claim 1, wherein the passive layer (112) and the second coating (108ab) has a second strip force therebetween in a range of 1 N to 5 N.

11. The optical fiber ribbon (100) as claimed in claim 1, wherein the passive layer (112) has a tensile strength in a range of 2 Megapascal to 40 MPa.

12. The optical fiber ribbon (100) as claimed in claim 1, wherein the passive layer (112) has a viscosity in a range of 0.2 Pascal-Second (Pa.s) to 4.2 Pa.s at 30 degree Celsius (°C).

13. The optical fiber ribbon (100) as claimed in claim 1, wherein a first and second resin joints are applied intermittently contacting a first layer (114a) of the first (102a) optical fibers and a second color layer (114b) of the second optical fibers (102b).

14. The optical fiber ribbon (100) as claimed in claim 1, wherein the plurality of resin joints are made up of a curable resin material selected from Ultraviolet (UV) curable resin material, a polyester resin, a phenolic resin, an alkyd resin, a polycarbonate resin, a polyamide resin, a silicone resin, an epoxy resin, an acrylate polymer.
